# FASCICULE DE BREVET EUROPEEN

(11) **EP 2 804 740 B1**
(45) Date de publication et mention de la délivrance du brevet: **04.11.2020**
(21) Numéro de dépôt: 13700419.8
(22) Date de dépôt: 18.01.2013
(51) Int. Cl.: B29C 48/10, B29C 55/28, B65D 35/12, B29C 48/21, B29C 53/38

(54) **PROCÉDÉ DE FABRICATION D'UNE JUPE D'UN TUBE SOUPLE**
VERFAHREN ZUR HERSTELLUNG EINER SCHÜRZE FÜR EINEN SCHLAUCH
METHOD FOR MANUFACTURING A SKIRT OF A FLEXIBLE TUBE

(30) Priorité: 19.01.2012 FR 1250561
(43) Date de publication de la demande: 26.11.2014
(73) Titulaire: Albéa Services, 92230 Gennevilliers (FR)
(72) Inventeur: JAMMET, Jean-Claude, 80090 Amiens (FR)
(74) Mandataire: Gevers & Orès
(86) Numéro de dépôt international: PCT/EP2013/050986
(87) Numéro de publication internationale: WO 2013/107892

(56) Documents cités:
- WO-A1-2004/033200
- WO-A2-2007/099214
- US-A- 3 022 543
- US-A- 3 832 270
- US-A- 4 183 882
- US-A- 4 477 506
- US-A- 4 731 214
- US-A- 4 892 765
- US-A1- 2003 157 350
- US-A1- 2007 014 897
- US-B1- 6 511 568

## Description

### DOMAINE DE L'INVENTION

L'invention concerne de manière générale les tubes souples en matière plastique destinés à stocker et distribuer des produits liquides à pâteux, et plus particulièrement leur procédé de fabrication.

### ARRIERE-PLAN TECHNOLOGIQUE

On connait déjà de tels procédés. Par exemple, le document US 2008/0286512 décrit un procédé de fabrication d'un film multicouche laminé pour un tube souple comprenant une couche d'aluminium enfouie, dans lequel on dispose de part et d'autre de la couche d'aluminium une couche protective orientée (c'est-à-dire une couche protective étirée dans une direction donnée) jointe à l'aluminium par une couche de matériau intermédiaire. Le film ainsi obtenu présente des propriétés barrière satisfaisantes, les couches formant le film étant en outre fines.

On a également proposé dans le document WO 2007/099214 un procédé de fabrication d'un film multicouche comprenant les étapes suivantes :
- coextrusion de résines pour former un film tubulaire extrudé sous la forme d'une première bulle, le film tubulaire comportant au moins une couche de surface extérieure comprenant une résine polyester ou polyoléfine, une couche intermédiaire comprenant une résine polyamide, et une couche de surface intérieure de thermoscellage ou thermosoudage comprenant une résine polyoléfine,
- bi-orientation du film tubulaire chauffé sous la forme d'une deuxième bulle, et
- stabilisation par traitement thermique à une température de stabilisation supérieure ou égale à la température de fusion de la résine polyoléfine majoritaire de la couche de surface intérieure, et éventuellement relaxation du film tubulaire sous la forme d'une troisième bulle.

Ce procédé permet ainsi d'obtenir des films multicouches fins pour la réalisation d'emballages rétractables, notamment sur des operculeuses. En effet, le traitement thermique réduit sa contrainte en rétractation, et permet ainsi son operculage sur des barquettes sans distorsion des barquettes et avec une ouverture d'un seul tenant.

Néanmoins, il n'est pas applicable à la fabrication de tube souples, et plus particulièrement de tubes de crèmes. En effet, les films obtenus doivent pouvoir être déchirés aisément par un utilisateur afin qu'il accède au contenu de la barquette, et sont pour cela très fins et fragiles. Or, dans le cas de tubes souples, la jupe doit résister aux contraintes appliquées par l'utilisateur (compression et/ou cisaillement) afin de délivrer le produit qu'elle contient sans rompre. Par ailleurs, ces films sont destinés à être operculés sur la barquette, par opposition à la jupe des tubes souples, qui est généralement fermée par soudure longitudinale de ses bords, et ne requière donc nullement des propriétés d'operculage comparables à celles des films d'emballage. US 2003/157350 A1, US 4 892 765 A, US 4 731 214 A, US 3 832 270 A, US 6 511 568 B1 et US 3 022 543 A divulguent également des procédés de production d'une jupe d'un tube souple dont une extrémité est destinée à être fermée par une tête.

### RESUME DE L'INVENTION

Un objectif de l'invention est de proposer un nouveau procédé de fabrication d'un tube souple, qui permette d'améliorer encore les propriétés barrières du tube, ses propriétés mécaniques, et notamment son module d'élasticité, son imprimabilité et sa stabilité, tout en réduisant l'épaisseur globale du film formant le tube.

Pour cela, l'invention propose un procédé de fabrication d'une jupe d'un tube souple dont une extrémité est destinée à être fermée par une tête, par exemple un tube de crème, par extrusion-soufflage à triple bulles d'un film bi-orienté selon la revendication 1.

Certaines caractéristiques optionnelles mais non limitatives de ce procédé de fabrication sont les suivantes :
- une pluralité de couches sont co-extrudées de manière à former un film tubulaire multicouche,
- la jupe est réalisée selon les étapes suivantes :
   * formation d'une enveloppe cylindrique à partir du film bi-orienté, et
   * soudage selon une ligne de soudure longitudinale des bords longitudinaux de l'enveloppe cylindrique,
- le procédé comprend en outre, préalablement à la formation de la jupe ouverte, une étape supplémentaire d'écrasement de la deuxième bulle ou de la troisième bulle, de manière doubler l'épaisseur du film,
- l'étape supplémentaire d'écrasement pour doubler l'épaisseur du film est réalisée par application d'une pression à chaud sur la deuxième bulle ou la troisième bulle, par extrusion lamination ou par lamination par adhésif avec solvant ou sans solvant,
- dans lequel l'étape supplémentaire d'écrasement pour doubler l'épaisseur du film est réalisée en ligne avec le procédé d'extrusion-soufflage à triple bulles,
- dans lequel le film est un film multicouche comprenant entre 2 et 22 couches,
- le film est un film multicouche comprenant 22 couches,
- dans lequel le film comprend au moins l'une des couches suivantes :
   * polyéthylène (PE),
   * polypropylène (PP),
   * polymères de cyclo-oléfines (COP),
   * copolymères de cyclo-oléfines (COC),
   * copolymère d'éthylène vinyl alcool (EVOH),
   * polyéthylène téréphtalate (PET),
   * polyéthylène téréphtalate glycolisé (PETg),
   * polyamide (PA),
   * polyfluorure de vinylidène (PVDf),
   * polyacrylonitrile (PAN),
   * polyéthylène naphthalate (PEN),
   * copolymère d'éthylène vinyle acétate (EVA),
   * copolymère d'éthylène méthacrylate (EMA),
   * acide polylactique (PLA),
   * poly-hydroxyalcanoate (PHA),
   * poly-hydroxybutyrate (PHB),
   * poly-butylène succinate (PBS),
   * liant.
- le liant comprend l'un au moins des éléments suivants : polyoléfines greffées anhydride maléique, copolymères d'éthylène vinyle acrylate, anhydride maléique, et
- le film comprend :
   * une couche externe imprimable et apte à être soudée, pouvant former en outre une barrière à la vapeur d'eau,
   * une couche intermédiaire formant barrière aux gaz ou aux parfums et arômes,
   * une couche interne apte à être soudée et/ou formant barrière à la vapeur d'eau.

Selon un deuxième aspect, l'invention propose un procédé de fabrication d'un tube, comprenant les étapes suivantes :
- fabriquer une jupe conformément à un procédé de fabrication comme décrit ci-dessus,
- fixer une tête sur l'une des extrémités de la jupe.

### BREVE DESCRIPTION DES DESSINS

D'autres caractéristiques, buts et avantages de la présente invention apparaîtront mieux à la lecture de la description détaillée qui va suivre, et en regard des figures annexées données à titre d'exemple non limitatif et sur lesquelles :

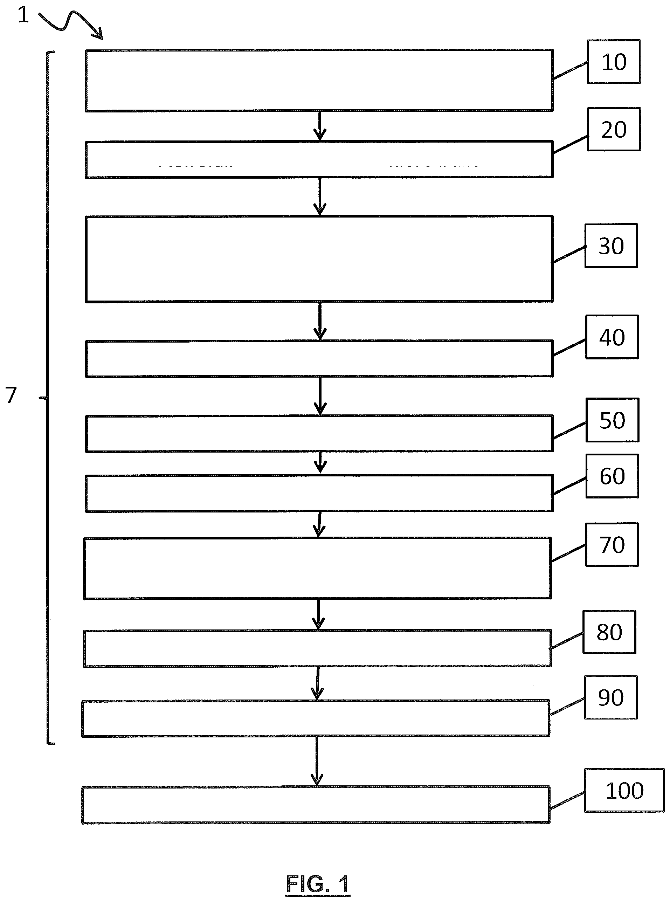

La figure 1 est un organigramme illustrant différentes étapes d'un exemple de réalisation d'un procédé de fabrication d'une jupe d'un tube conforme à l'invention ;

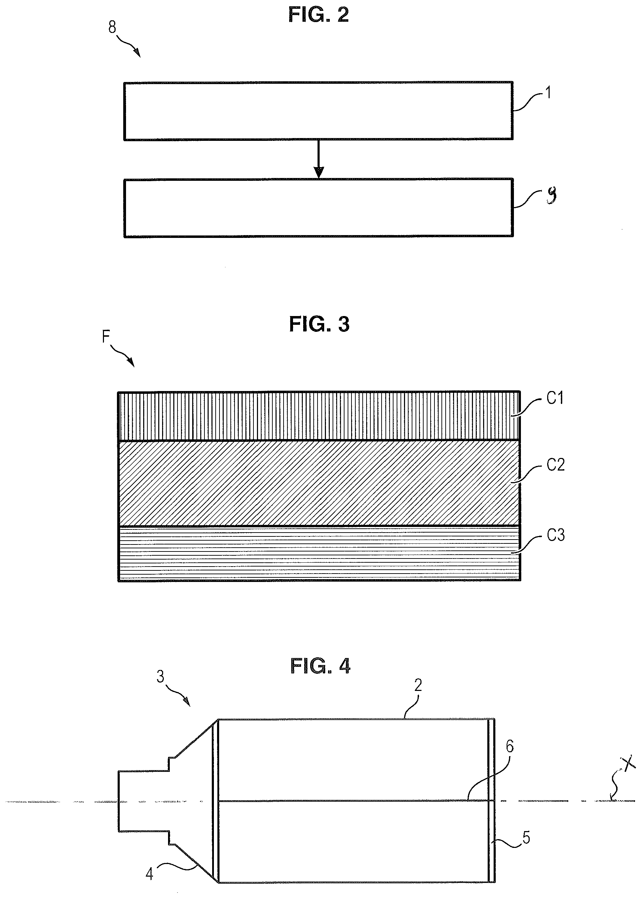

La figure 2 est un organigramme illustrant différentes étapes d'un exemple de réalisation d'un procédé de fabrication d'un tube conforme à l'invention,
La figure 3 est un exemple d'un film multicouche vu en coupe susceptible d'être utilisé dans un procédé de fabrication de la jupe d'un tube conforme à l'invention ;
La figure 4 illustre un tube pouvant comprendre une forme de réalisation d'une jupe réalisée selon un mode de réalisation d'un procédé conforme à l'invention ;
La figure 5a illustre un exemple de réalisation d'une tête de tube rapportée sur une jupe conformément à un mode de réalisation du procédé de l'invention ; et
La figure 5b illustre un exemple de réalisation d'une tête de tube surmoulée sur une jupe conformément à un mode de réalisation du procédé de l'invention.

### DESCRIPTION DETAILLEE D'UN MODE DE REALISATION

Les tubes souples 3 sont communément constitués d'une tête de tube 4 associée à une jupe 2.

La tête de tube 4 comprend un goulot présentant à une première extrémité une ouverture par laquelle le produit est extrait du volume interne du tube 3, et une deuxième extrémité, opposée à la première extrémité, à laquelle est reliée une épaule.

La jupe 2 quant à elle forme le volume interne du tube 3 adapté pour recevoir du produit, et est conventionnellement formée d'une feuille, monocouche ou multicouche, adaptée pour présenter des propriétés de résistance mécanique et d'étanchéité satisfaisantes. Elle est fixée au goulot par l'intermédiaire de l'épaule.

La tête de tube 4 est en revanche communément réalisée par injection de matériau plastique.

Un exemple de procédé de fabrication 1 d'une jupe 2 d'un tube souple 3 dont une extrémité est destinée à être fermée par une tête de tube 4 (par exemple un tube de crème), et un exemple de procédé de fabrication d'un tel tube 3, vont à présent être décrits en référence aux figures annexées.

Le procédé de fabrication 1 comprend une étape 7 d'extrusion-soufflage à triple bulles d'un film multicouche bi-orienté. Un tel procédé 7 comprend notamment les sous-étapes suivantes :
- extrusion 10 d'un film de manière à obtenir un film tubulaire sous la forme d'une première bulle,
- refroidissement et aplanissement 20 de la première bulle,
- bi-orientation 30 dans une direction machine (correspondant à la direction de défilement du film) et une direction transverse (correspondant à la direction transversale à la direction de défilement du film) de la première bulle par chauffage et gonflage de manière à former une deuxième bulle,
- refroidissement 40 et aplanissement 50 de la deuxième bulle,
- chauffage et gonflage 70 de la deuxième bulle pour former une troisième bulle,
- refroidissement et d'aplanissement 90 de la troisième bulle.

Dans le cas d'un film multicouche, on co-extrude 10 les différentes couches destinées à former le film multicouche au cours de la première étape de manière à obtenir un film tubulaire multicouche sous la forme de la première bulle.

De plus, l'aplanissement a pour objectif de pincer les parois des bulles pour créer une cavité et y maintenir une pression interne, sans écraser le film formant la bulle afin de ne pas l'endommager. Cette étape peut par exemple être réalisée dans des rouleaux pinceurs (nip roller en anglais).

On pourra consulter par exemple les documents WO 2008/065280, EP 2 100 726 ou encore FR 2 897 795 pour plus de détails sur ce procédé d'extrusion-soufflage.

Selon une première forme de réalisation, le diamètre de la troisième bulle est identique au diamètre souhaité pour le tube 3. Il suffit alors de couper la bulle à la longueur souhaitée pour obtenir la jupe 2 du tube 3, puis de fermer la jupe 2 par fixation 9 d'une tête 4 au niveau d'une première extrémité de la jupe, et soudure de sa deuxième extrémité.

Selon une deuxième forme de réalisation, la largeur du film bi-orienté obtenu suite au procédé 7 est globalement deux fois plus grande que la largeur souhaitée pour la jupe 2 du tube 3. Il est alors possible de réaliser la jupe 2 du tube 3 en ligne avec le procédé d'extrusion-soufflage à triple bulles 7 (étape 100). Pour cela, le film bi-orienté est replié sur lui-même autour d'un axe longitudinal X, qui est défini par la direction d'extension du tube 3, de manière à former une enveloppe cylindrique, dont les bords longitudinaux sont ensuite soudés selon une ligne de soudure 6 longitudinale, qui s'étend sensiblement parallèlement à l'axe X, pour former une jupe 2 ouverte au niveau de deux extrémités opposées. Au cours d'une étape ultérieure de fabrication, la jupe 2 est ensuite destinée à recevoir 9 une tête de tube 4 au niveau d'une première extrémité, par exemple par injection, puis à être remplie par sa deuxième extrémité 5 avant que celle-ci soit refermée par soudage.

Selon une troisième forme de réalisation, la largeur du film obtenu est bien supérieure à celle nécessaire à la fabrication du tube 3. Le film bi-orienté subit alors des étapes supplémentaires de fabrication de tube conventionnelles avant d'être replié de manière à former une enveloppe cylindrique dont les bords longitudinaux sont ensuite soudés selon la ligne de soudure 6 longitudinale de manière à réaliser la jupe 2, puis le tube 3 lui-même.

Afin de stabiliser la géométrie du film bi-orienté et d'éviter un éventuel retrait de matière lors de sa soudure longitudinale pour former le cylindre constituant la jupe 2, le procédé 7 peut en outre comprendre une étape supplémentaire 80 de stabilisation du film bi-orienté par traitement thermique. Pour cela, avant l'étape 90 d'aplanissement, la pression interne de la troisième bulle est maintenue à une pression supérieure à la pression atmosphérique, et subit simultanément un traitement thermique de type recuit (« annealing » en anglais). Le recuit de la troisième bulle permet ainsi de relâcher les contraintes internes dans le film bi-orienté résultant de l'étape 30 de bi-orientation. En effet, sans cette étape 80 de mise sous pression et de recuit, la soudure longitudinale du film bi-orienté, qui est nécessaire à la réalisation de la jupe, entraine un retrait local de la matière au niveau de la soudure en raison de la tension créée dans le film bi-orienté par l'étape 30 de bi-orientation. On notera que ce retrait local peut également avoir lieu au cours de l'étape finale de soudure des extrémités de la jupe 2 en vue de fermer le tube 3.

Le film bi-orienté peut ensuite subir les étapes de formage du tube 3, à savoir son pliage pour forme une enveloppe cylindrique, la soudure longitudinale des bords de l'enveloppe de manière à obtenir la jupe 2, et le cas échéant l'injection de la tête de tube sur la jupe 2 (ou sa fixation).

On notera que l'étape de stabilisation 80 n'a pas pour conséquences d'annuler la bi-orientation ou ses effets, mais simplement de relâcher les contraintes qui en résultent et risquent par conséquent d'engendrer un retrait local du film bi-orienté au niveau de ses bords lors du soudage de l'enveloppe cylindrique.

Le film bi-orienté (monocouche ou multicouche) présente alors une épaisseur pouvant atteindre 100 µm à l'issue du procédé d'extrusion soufflage 7.

La deuxième ou la troisième bulle peut être collapsée 60, c'est-à-dire écrasée, de manière à doubler l'épaisseur du film bi-orienté final servant à la réalisation de la jupe 2. Cette étape de collapsage 60 est réalisée de préférence après l'étape d'aplanissement 50 de la deuxième bulle (avant la formation de la troisième bulle), ou après l'étape d'aplanissement 90 de la troisième bulle, conformément à la description du document FR 2 908 345.

Pour cela, selon une forme de réalisation, il est possible de découper la bulle écrasée de manière à former deux films distincts. En variante, la bulle écrasée est doublée directement, sans découpage préalable.

Par exemple, le film bi-orienté final peut être doublé à l'issue du procédé d'extrusion soufflage 7 en appliquant une pression à chaud sur les couches externes de la bulle (il s'agira alors de collapsage ou de recollage). Les parties en vis-à-vis de la couche interne de la bulle sont alors plaquées l'une contre l'autre à une température de scellage inférieure à la température de fusion de leur matériau constitutif, et s'accolent pour ne former plus qu'une seule couche (liaison cohésive). Pour améliorer l'adhérence entre les deux couches internes, on peut agir sur le gaz de gonflage en introduisant par exemple une atmosphère non oxydante (par exemple de l'azote) et ajouter en sortie un ou plusieurs passages au travers de rouleaux presseurs.

De manière alternative, le film bi-orienté final peut également être doublé à l'issue du procédé d'extrusion soufflage 7 grâce à un procédé d'extrusion lamination, ou de lamination par adhésif avec solvant ou sans solvant. Cette étape de doublage de la bulle peut être réalisée en ligne avec le procédé d'extrusion-soufflage à triple bulles 7.

Afin d'augmenter encore l'épaisseur du film bi-orienté final destiné à former la jupe 2 du tube 3, il est également possible de rapporter des couches supplémentaires de renforcement sur le film bi-orienté final, par exemple en ligne. Par exemple les couches supplémentaires peuvent être rapportées par recollage de gaine, et/ou laminage à chaud ou à froid, ou encore par extrusion couchage.

Le film bi-orienté final obtenu conformément au procédé 1 décrit ci-dessus peut alors être utilisé dans la réalisation de jupes 3 et de tubes 2 sur des machines conventionnelles.

La jupe 2 peut par exemple être réalisée par soudage des bords longitudinaux de l'enveloppe cylindrique le long d'une ligne de soudure 6 longitudinale, le tube 3 étant ensuite obtenu par fixation d'une tête de tube 4 sur la jupe 2 ainsi formée, et la fermeture par soudure de l'extrémité opposée de la jupe (après remplissage du tube 3 par le produit).

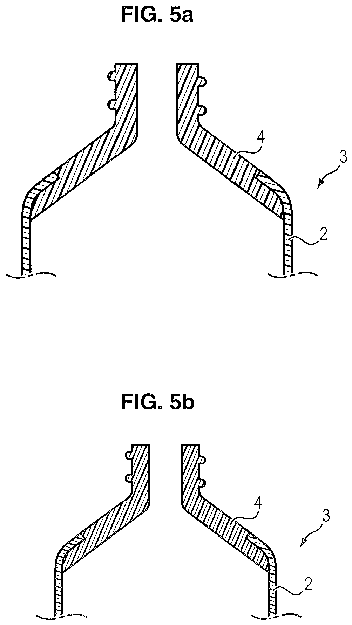

Par exemple, la tête de tube 4 peut être réalisée séparément, par injection moulage (injection de matière dans un moule) ou par compression (compression de matière dans un moule), pour être ensuite rapportée sur l'une des extrémités ouvertes de la jupe 2 par soudage thermique ou par induction, comme illustré sur la figure 5a. En particulier, la tête de tube 4 peut être réalisée en une seule pièce de matière (et être monobloc), avant d'être attachée ensuite à la jupe 2, comme indiqué ci-dessus.

En variante, la tête de tube 4 peut également être directement surmoulée sur la jupe (par injection moulage de la matière constituant la tête 4 directement sur l'une des extrémités ouvertes de la jupe 2), comme illustré sur la figure 5b. On pourra se référer à la demande EP 2 500 157 pour plus de détails concernant la réalisation de la tête de tube 4. En particulier, la tête de tube 4 peut comprendre un insert annulaire qui s'étend dans une partie intermédiaire entre le goulot et l'épaule de la tête de tube 4. L'insert comprend alors une couche métallique, ou un multicouche laminé comprenant une feuille métallique, de manière à former une barrière à la vapeur d'eau, aux gaz tels que l'oxygène, et/ou aux parfums et arômes.

Selon une forme de réalisation, les matériaux constitutifs des couches co-extrudées du film multicouche ou du film monocouche lui-même sont choisis de manière à remplir les quatre conditions cumulatives suivantes.

Premièrement, le film bi-orienté final doit être apte à être soudé longitudinalement de manière à former une jupe 2 d'un tube 3 (la jupe 2 formant alors une enveloppe cylindrique de révolution, ouverte au niveau de deux extrémités opposées, l'une de ces extrémités étant destinée à recevoir une tête de tube 4, tandis que l'autre extrémité sert au remplissage du tube 3 et est destinée à être soudée après remplissage). Le film final doit donc être soudable de telle sorte que la ligne de soudure 6 soit rectiligne et ne présente pas de déformations (frisures, vaguelettes, etc.). Cette condition peut notamment être respectée grâce à l'étape 80 de stabilisation du film, qui permet d'éviter tout retrait du film au cours du soudage. Par ailleurs, une fois la jupe 2 formée, le film bi-orienté doit être apte à être soudé sur la tête de tube 4 ou, en variante, à recevoir la tête de tube 4 par surmoulage, sans se déformer.

Deuxièmement, une fois la soudure réalisée de manière à former la jupe 2, le film final doit en outre être apte à maintenir sa forme globalement cylindrique de révolution. Une ovalisation du film risquerait en effet de nuire à la soudure 9 de la tête 4 sur l'une des extrémités de la jupe 2, et pourrait provoquer le cas échant des défauts d'impression.

Troisièmement, l'extrémité 5 de la jupe 2 du tube 3 destinée à permettre son remplissage doit également être apte à être soudée une fois le remplissage effectué. Le film final doit donc être stable thermiquement et ne pas se déformer lors de la soudure. Cette extrémité 5 de la jupe 2 doit en outre rester lisse à tout instant et ne pas se déformer (apparition de frisures, de vaguelettes, etc.). Ici encore, l'étape de stabilisation 80 du film permet, avec le choix spécifique des matériaux constitutifs du film et de la tête 4, de remplir cette condition.

Quatrièmement, les matériaux utilisés pour la réalisation du film doivent être résistants à la fissuration sous contrainte (« stress cracking » en anglais), en particulier en milieu tensioactif dans le cas des tubes destinés à contenir des produits cosmétiques.

Des exemples de films et de matériaux pouvant être utilisés pour la réalisation d'une jupe 2 ou d'un tube 3 sont donc les suivants :
- un film monocouche à base de polyéthylène (PE) et/ou de copolymères de polyéthylène, de polypropylène (PP) et/ou de copolymères de polypropylène, de mélanges de polypropylène, de polyester tel que du polyéthylène téréphtalate (PET), etc.
- un film multicouche comprenant :
   * une couche externe C1 imprimable et apte à être soudée, pouvant former en outre une barrière à la vapeur d'eau, et comprenant par exemple du polyéthylène, du polypropylène, des polymères de cyclo-oléfines (COP), des copolymères de cyclo-oléfines (COC), des mélanges de polymères, des alliages, du polyéthylène téréphtalate glycolisé (PETg), de l'acide polylactique (PLA), du poly-hydroxyalcanoate (PHA), du poly-hydroxybutyrate (PHB), du poly-butylène succinate (PBS), etc.
   * une couche intermédiaire C2 formant barrière aux gaz tels que l'oxygène, ou barrière aux parfums et arômes, et comprenant par exemple des copolymères d'éthylène vinyl alcool (EVOH), du polyfluorure de vinylidène (PVDf), des polymères de cyclo-oléfines (COP), des copolymères de cyclo-oléfines (COC), du polyamide (PA), du polyester tel que du polyéthylène téréphtalate (PET), de copolymère d'éthylène vinyle acétate (EVA), de copolymère d'éthylène méthacrylate (EMA), etc.
   * une couche interne C3 apte à être soudée et/ou formant barrière à la vapeur d'eau, pouvant comprendre des matériaux similaires à ceux de la couche externe.

Des liants sont en outre nécessaires pour faire adhérer les différentes couches entre elles. Il s'agit en général, de polyoléfines greffées anhydride maléique, ou de copolymères d'éthylène vinyle acrylate, anhydride maléique.

Le film monocouche ou multicouche présente alors une épaisseur comprise entre 60 et 130 microns à l'issue du procédé d'extrusion-soufflage 7.

### Exemples de films multicouches susceptibles d'être utilisés pour un procédé de fabrication 1 comme décrit ci-dessus pour obtenir une jupe 2 d'un tube souple 3:

Les exemples de films monocouches ou multicouches sont donnés avant doublage, c'est-à-dire à l'issue du procédé d'extrusion-soufflage 7.

Par ailleurs, dans les exemples qui suivent, l'ensemble des couches composant le film subit l'étape de bi-orientation du procédé d'extrusion-soufflage à triple bulles 7.
**Exemple 1.** Un film multicouche comprenant les couches successives suivantes : polyéthylène (PE), liant, copolymère d'éthylène vinyl alcool (EVOH), liant, polyéthylène (PE), chaque couche ayant une épaisseur de 35 µm, 10µm, 10 µm, 10µm, et 35 µm respectivement.
**Exemple 2.** Un film multicouche comprenant les couches successives suivantes : polypropylène (PP), liant, copolymère d'éthylène vinyl alcool (EVOH), liant, polypropylène (PP), chaque couche ayant une épaisseur de 35 µm, 10 µm, 10 µm, 10 µm, et 35 µm respectivement.
**Exemple 3.** Un film multicouche comprenant les couches successives suivantes : polyéthylène (PE), liant, polypropylène (PP), liant, copolymère d'éthylène vinyl alcool (EVOH), liant, polypropylène (PP), liant, copolymère d'éthylène vinyle acétate (EVA): chaque couche ayant une épaisseur de 5 µm, 5 µm, 30 µm, 5 µm, 10 µm, 5 µm, 30 µm, 5 µm, et 5 µm respectivement.
   Dans l'exemple 3, la couche d'EVA permet alors un recollage de l'une des bulles (deuxième ou troisième), afin de doubler l'épaisseur du film et obtenir le film final destiné à être utilisé pour la réalisation de la jupe 2. Le recollage peut alors avoir lieu à la fin du procédé triple bulles 7, ou après la seconde bulle, avant la formation de la troisième bulle, comme décrit ci-avant.
**Exemple 4.** Un film comprenant les couches successives suivantes : polyéthylène (PE), liant, polypropylène (PP), liant, copolymère d'éthylène vinyl alcool (EVOH), liant, polypropylène (PP), liant, polyéthylène (PE), chaque couche ayant une épaisseur de 5 µm, 5 µm, 30 µm, 5 µm, 10 µm, 5 µm, 30 µm, 5 µm, et 5 µm respectivement.

Dans l'exemple 4, le film bi-orienté ainsi obtenu peut alors être doublé 60 par application d'une pression à chaud sur la deuxième ou la troisième bulle, par extrusion lamination, ou par lamination par adhésif avec solvant ou sans solvant, de manière à obtenir le film final destiné à être utilisé pour la réalisation de la jupe 2. Cette étape de doublage de la bulle peut par exemple être réalisée en ligne avec le procédé d'extrusion-soufflage à triple bulles 7.

L'épaisseur du film final est alors comprise entre 100 µm et 300 µm environ.

En variante, il est également possible de réaliser des films multicouches mixtes comprenant en outre une feuille d'aluminium.

Par ailleurs, afin d'augmenter la rigidité et/ou les propriétés barrière du film, on pourra par exemple mélanger au polyéthylène (PE) ou au polypropylène (PP) des polymères de renforcement tels que les polymères et copolymères de cyclo-oléfine (COP et COC).

De plus, la bi-orientation étant plus performante en termes de propriétés mécaniques et de barrière avec du polypropylène (PP), il est en outre possible de réaliser des films comprenant à la fois des polymères de polyéthylène (PE) et de polypropylène (PP), et plus particulièrement des films comprenant les couches successives suivantes : polyéthylène (PE), liant, polypropylène (PP), liant, copolymère d'éthylène vinyl alcool (EVOH), liant, polypropylène (PP), liant, polyéthylène (PP) : chaque couche pouvant avoir une épaisseur de 5 µm, 5 µm, 30 µm, 5 µm, 10 µm, 5 µm, 30 µm, 5 µm, et 5 µm respectivement.

Les liants dans ce cas pourront, par exemple, être des copolymères d'éthylène propylène.

Enfin, les polymères et copolymères de cyclo-oléfines (COP et COC), le polyéthylène téréphtalate (PET), polyéthylène téréphtalate glycolisé (PETg), le polyamide (PA), le polyfluorure de vinylidène (PVDf), le polyacrylonitrile (PAN), le polyéthylène naphthalate (PEN), etc. pourront aussi être utilisés comme couche barrière.

## Revendications

1. Procédé de fabrication (1) d'une jupe (2) d'un tube souple dont une extrémité est destinée à être fermée par une tête, par exemple un tube de crème, par extrusion-soufflage à triple bulles (7) d'un film bi-orienté, le procédé d'extrusion-soufflage comprenant les étapes suivantes :
- extrusion (10) d'un film de manière à obtenir un film tubulaire sous la forme d'une première bulle,
- refroidissement (20) et aplanissement de la première bulle,
- bi-orientation (30) dans une direction machine et une direction transverse du film par chauffage et gonflage de manière à former une deuxième bulle,
- refroidissement (40) et aplanissement (50) de la deuxième bulle,
- chauffage et gonflage (70) de la deuxième bulle pour former une troisième bulle,
- refroidissement et aplanissement (90) de la troisième bulle
le procédé de fabrication étant **caractérisé en ce qu'**il comprend en outre les étapes suivantes :
- préalablement à l'aplanissement (90) de la troisième bulle, une étape de stabilisation thermique (80) du film formant la troisième bulle réalisée par application simultanée d'une pression interne et d'un traitement thermique de la troisième bulle de manière à effectuer un recuit du film formant ladite troisième bulle et
- suite à l'aplanissement (90) de la troisième bulle, la formation (100) d'une jupe ouverte (2) au niveau de deux extrémités opposées à partir du film bi-orienté.

2. Procédé de fabrication (1) selon la revendication 1, dans lequel une pluralité de couches sont co-extrudées (10) de manière à former un film tubulaire multicouche.

3. Procédé de fabrication (1) selon l'une des revendications 1 à 2, dans lequel la jupe (2) est réalisée selon les étapes suivantes :
- formation d'une enveloppe cylindrique à partir du film bi-orienté, et
- soudage selon une ligne de soudure (6) longitudinale des bords longitudinaux de l'enveloppe cylindrique.

4. Procédé de fabrication (1) selon l'une des revendications 1 à 3, comprenant en outre, préalablement à la formation de la jupe ouverte (2), une étape supplémentaire d'écrasement (60) de la deuxième bulle ou de la troisième bulle, de manière doubler l'épaisseur du film.

5. Procédé de fabrication (1) selon la revendication 4, dans lequel, l'étape supplémentaire d'écrasement (60) pour doubler l'épaisseur du film est réalisée par application d'une pression à chaud sur la deuxième bulle ou la troisième bulle, par extrusion lamination ou par lamination par adhésif avec solvant ou sans solvant.

6. Procédé de fabrication (1) selon l'une des revendications 4 ou 5, dans lequel l'étape supplémentaire d'écrasement (60) pour doubler l'épaisseur du film est réalisée en ligne avec le procédé d'extrusion-soufflage à triple bulles (7).

7. Procédé de fabrication (1) selon l'une des revendications 1 à 6, dans lequel le film est un film multicouche comprenant entre 2 et 22 couches.

8. Procédé de fabrication (1) selon la revendication 7, dans lequel le film est un film multicouche comprenant 22 couches.

9. Procédé de fabrication (1) selon l'une des revendications 1 à 8, dans lequel le film comprend au moins l'une des couches suivantes :
- polyéthylène (PE),
- polypropylène (PP),
- polymères de cyclo-oléfines (COP),
- copolymères de cyclo-oléfines (COC),
- copolymère d'éthylène vinyl alcool (EVOH),
- polyéthylène téréphtalate (PET),
- polyéthylène téréphtalate glycolisé (PETg),
- polyamide (PA),
- polyfluorure de vinylidène (PVDf),
- polyacrylonitrile (PAN),
- polyéthylène naphthalate (PEN),
- copolymère d'éthylène vinyle acétate (EVA),
- copolymère d'éthylène méthacrylate (EMA),
- acide polylactique (PLA),
- poly-hydroxyalcanoate (PHA),
- poly-hydroxybutyrate (PHB),
- poly-butylène succinate (PBS),
- liant.

10. Procédé de fabrication (1) selon la revendication 9, dans lequel le liant comprend l'un au moins des éléments suivants : polyoléfines greffées anhydride maléique, copolymères d'éthylène vinyle acrylate, anhydride maléique.

11. Procédé de fabrication (1) selon l'une des revendications 1 à 10, dans lequel le film comprend :
- une couche externe (C1) imprimable et apte à être soudée, pouvant former en outre une barrière à la vapeur d'eau,
- une couche intermédiaire (C2) formant barrière aux gaz ou aux parfums et arômes,
- une couche interne (C3) apte à être soudée et/ou formant barrière à la vapeur d'eau.

12. Procédé de fabrication (8) d'un tube (3), comprenant les étapes suivantes :
- fabriquer (1) une jupe (2) conformément à un procédé de fabrication (1) selon l'une des revendications 1 à 12,
- fixer (9) une tête de tube (4) sur l'une des extrémités de la jupe (2).

## Patentansprüche

1. Herstellungsverfahren (1) einer Schürze (2) eines Schlauches, von dem ein Ende dazu bestimmt ist, durch einen Kopf geschlossen zu werden, beispielsweise einer Creme-Tube, durch Extrudier-Blasformen mit drei Blasen (7) eines biaxial ausgerichteten Films, wobei das Extrudier-Blasformverfahren die folgenden Schritte umfasst:
- Extrudieren (10) eines Films, um einen rohrförmigen Film in Form einer ersten Blase zu erhalten,
- Kühlen (20) und Ebnen der ersten Blase,
- biaxiales Ausrichten (30) in einer Maschinenrichtung und einer Querrichtung des Films durch Erwärmen und Aufblasen, um eine zweite Blase zu bilden,
- Kühlen (40) und Ebnen (50) der zweiten Blase,
- Erwärmen und Aufblasen (70) der zweiten Blase, um eine dritte Blase zu bilden,
- Kühlen und Ebnen (90) der dritten Blase
wobei das Herstellungsverfahren **dadurch gekennzeichnet ist, dass** es weiter die folgenden Schritte umfasst:
- vor dem Ebnen (90) der dritten Blase einen Schritt der Wärmestabilisierung (80) des die dritte Blase bildenden Films, der durch gleichzeitiges Anlegen eines inneren Drucks und einer Wärmebehandlung der dritten Blase realisiert wird, um ein Tempern des die dritte Blase bildenden Films durchzuführen, und
- nach dem Ebnen (90) der dritten Blase das Bilden (100) einer im Bereich der beiden entgegengesetzten Enden offenen Schürze (2) aus dem biaxial ausgerichteten Film.

2. Herstellungsverfahren (1) nach Anspruch 1, wobei eine Vielzahl von Schichten gemeinsam extrudiert (10) werden, um einen mehrschichtigen rohrförmigen Film zu bilden.

3. Herstellungsverfahren (1) nach einem der Ansprüche 1 bis 2, wobei die Schürze (2) gemäß den folgenden Schritten realisiert wird:
- Bilden einer zylindrischen Hülle aus dem biaxial ausgerichteten Film, und
- Schweißen entlang einer Längsschweißlinie (6) der Längsränder der zylindrischen Hülle.

4. Herstellungsverfahren (1) nach einem der Ansprüche 1 bis 3, weiter, vor dem Bilden der offenen Schürze (2) einen zusätzlichen Quetschschritt (60) der zweiten Blase oder der dritten Blase umfassend, um die Dicke des Films zu doppeln.

5. Herstellungsverfahren (1) nach Anspruch 4, wobei der zusätzliche Quetschschritt (60) zum Doppeln der Dicke des Films durch Anlegen eines Drucks, warm, an die zweite Blase oder an die dritte Blase durch Extrudieren-Laminieren oder durch Laminieren durch Klebstoff mit Lösungsmittel oder ohne Lösungsmittel realisiert wird.

6. Herstellungsverfahren (1) nach einem der Ansprüche 4 oder 5, wobei der zusätzliche Quetschschritt (60) zum Doppeln der Dicke des Films in Einklang mit dem Extrudier-Blasformverfahren mit drei Blasen (7) realisiert wird.

7. Herstellungsverfahren (1) nach einem der Ansprüche 1 bis 6, wobei der Film ein mehrschichtiger Film ist, der zwischen 2 und 22 Schichten umfasst.

8. Herstellungsverfahren (1) nach Anspruch 7, wobei der Film ein mehrschichtiger Film ist, der 22 Schichten umfasst.

9. Herstellungsverfahren (1) nach einem der Ansprüche 1 bis 8, wobei der Film mindestens eine der folgenden Schichten umfasst:
- Polyethylen (PE),
- Polypropylen (PP),
- Cycloolefin-Polymere (COP),
- Cycloolefin-Copolymere (COC),
- Ethylen-Vinylalkohol-Copolymer (EVOH),
- Polyethylenterephthalat (PET),
- glykolisiertes Polyethylenterephthalat (PETg),
- Polyamid (PA),
- Polyvinylidenfluorid (PVDf),
- Polyacrylnitril (PAN),
- Polyethylennaphthalat (PEN),
- Ethylen-Vinylacetat-Copolymer (EVA),
- Ethylen-Methacrylat-Copolymer (EMA),
- Polymilchsäure (PLA),
- Polyhydroxyalkanoat (PHA),
- Polyhydroxybutyrat (PHB),
- Polybutylensuccinat (PBS),
- Bindemittel.

10. Herstellungsverfahren (1) nach Anspruch 9, wobei das Bindemittel mindestens eines der folgenden Elemente umfasst: Maleinsäureanhydrid gepfropfte Polyolefine, Ethylen-Vinylacrylat-Copolymere, Maleinsäureanhydrid.

11. Herstellungsverfahren (1) nach einem der Ansprüche 1 bis 10, wobei der Film umfasst:
- eine Außenschicht (C1), die bedruckbar und imstande ist, geschweißt zu werden, die weiter eine Wasserdampfsperre bilden kann,
- eine Zwischenschicht (C2), die eine Gas- oder Parfüm- und Aromasperre bildet,
- eine Innenschicht (C3), die imstande ist, geschweißt zu werden, und/ oder eine Wasserdampfsperre bildet.

12. Herstellungsverfahren (8) eines Rohres (3), die folgenden Schritte umfassend:
- Herstellen (1) einer Schürze (2) entsprechend einem Herstellungsverfahren (1) nach einem der Ansprüche 1 bis 12,
- Befestigen (9) eines Rohrkopfes (4) an einem der Enden der Schürze (2).

## Claims

1. Method for manufacturing (1) a skirt (2) of a flexible tube, one end of which is intended to be closed by a head, for example a tube for cream, by triple-bubble extrusion blow moulding (7) of a biaxially oriented film, the extrusion blow moulding method comprising the following steps:
- extruding (10) a film so as to obtain a tubular film in the form of a first bubble,
- cooling (20) and flattening the first bubble,
- biaxial orientation (30) in a machine direction and a transverse direction of the film by heating and inflating so as to form a second bubble,
- cooling (40) and flattening (50) the second bubble,
- heating and inflating (70) the second bubble to form a third bubble,
- cooling and flattening (90) the third bubble,
the manufacturing method being **characterised in that** it further comprises the following steps:
- prior to the flattening (90) of the third bubble, a step of thermal stabilisation (80) of the film forming the third bubble made by simultaneous application of an internal pressure and a thermal treatment of the third bubble so as to anneal the film forming said third bubble, and
- following the flattening (90) the third bubble, the formation (100) of an open skirt (2) at two opposite ends from the biaxially oriented film.

2. Manufacturing method (1) according to claim 1, wherein a plurality of layers are coextruded (10) so as to form a multilayer tubular film.

3. Manufacturing method (1) according to one of claims 1 to 2, wherein the skirt (2) is made according to the following steps:
- formation of a cylindrical envelope from the biaxially oriented film, and
- welding along a longitudinal welding line (6) of the longitudinal edges of the cylindrical envelope.

4. Manufacturing method (1) according to one of claims 1 to 3, further comprising, prior to the formation of the open skirt (2), an additional step of flattening (60) the second bubble or the third bubble, so as to double the thickness of the film.

5. Manufacturing method (1) according to claim 4, wherein, the additional flattening step (60) to double the thickness of the film is carried out by applying a hot pressure to the second bubble or the third bubble, by lamination extrusion or by lamination by adhesive with solvent or without solvent.

6. Manufacturing method (1) according to one of claims 4 or 5, wherein the additional flattening step (60) to double the thickness of the film is carried out in line with the triple-bubble extrusion blow moulding method (7).

7. Manufacturing method (1) according to one of claims 1 to 6, wherein the film is a multilayer film comprising between 2 and 22 layers.

8. Manufacturing method (1) according to claim 7, wherein the film is a multilayer film comprising 22 layers.

9. Manufacturing method (1) according to one of claims 1 to 8, wherein the film comprises at least one of the following layers:
- polyethylene (PE),
- polypropylene (PP),
- cycloolefin polymers (COP),
- cycloolefin copolymers (COC),
- ethylene vinyl alcohol copolymer (EVOH),
- polyethylene terephthalate (PET),
- glycol polyethylene terephthalate (PETg),
- polyamide (PA),
- polyvinylidene fluoride (PVDf),
- polyacrylonitrile (PAN),
- polyethylene naphthalate (PEN),
- ethylene vinyl acetate copolymer (EVA),
- ethylene methacrylate copolymer (EMA),
- polylactic acid (PLA),
- polyhydroxyalkanoate (PHA),
- polyhydroxybutyrate (PHB),
- polybutylene succinate (PBS),
- binding agent.

10. Manufacturing method (1) according to claim 9, wherein the binding agent comprises at least one of the following elements: maleic anhydride grafted polyolefins, ethylene vinyl acrylate copolymers, maleic anhydride.

11. Manufacturing method (1) according to one of claims 1 to 10, wherein the film comprises:
- an external layer (C1), printable and capable of being welded, which could furthermore form a barrier to water vapour,
- an intermediate layer (C2) forming a barrier to gases and to perfumes and aromas,
- an internal layer (C3) capable of being welded and/or forming a barrier to water vapour.

12. Method for manufacturing (8) a tube (3), comprising the following steps:
- manufacturing (1) a skirt (2) according to a manufacturing method (1) according to one of claims 1 to 12,
- fixing (9) a tube head (4) on one of the ends of the skirt (2).
